Europäisches Patentamt

European Patent Office

Office européen des brevets

(11) Numéro de publication: **0 242 327**
**A2**

# (12) DEMANDE DE BREVET EUROPEEN

(21) Numéro de dépôt: **87810218.5**

(22) Date de dépôt: **07.04.87**

(51) Int. Cl.⁴: **A 01 G 25/02**

(30) Priorité: **11.04.86 CH 1454/86**

(43) Date de publication de la demande:
**21.10.87 Bulletin 87/43**

(84) Etats contractants désignés:
**AT BE CH DE ES FR GB GR IT LI LU NL SE**

(71) Demandeur: **Maillefer S.A.**
**Route du Bois**
**CH-1024 Ecublens Canton de Vaud (CH)**

(72) Inventeur: **Buluschek, Bruno**
**Chemin du Crêt 5**
**CH-1026 Echandens (CH)**

(74) Mandataire: **Rochat, Daniel Jean et al**
**Bovard SA Ingénieurs-conseils ACP Optingenstrasse 16**
**CH-3000 Bern 25 (CH)**

(54) **Procédé de fabrication d'un tuyau d'irrigation par goutte à goutte et tuyau d'irrigation fabriqué selon ce procédé.**

㉗ Le tuyau d'irrigation comporte un profilé de base (1) tubulaire, formant le conduit primaire et présentant dans sa surface extérieure des gorges (2). Une couche extérieure (4) est extrudée sur le profilé de base de façon à réaliser avec les gorges (2) des conduits secondaires continus sur toute la longueur du tuyau. Les ouvertures d'entrée (3) et les ouvertures de sortie (5) délimitent dans les conduits secondaires des segments d'une longueur prédéterminée assurant chacun, en fonction de la pression d'alimentation, un débit apte à irriger en permanence et au goutte à goutte une des plantes de la culture qui doit être irrigée. Les ouvertures de sortie (5) et les ouvertures d'entrée (3) sont réparties sur des lignes hélicoïdales dans le cas où les conduits secondaires sont rectilignes. Elles peuvent être réparties sur des lignes droites constituant des génératrices du tuyau si les conduits secondaires décrivent eux-mêmes des lignes hélicoïdales.

FIG. 2

EP 0 242 327 A2

## Description

### Procédé de fabrication d'un tuyau d'irrigation par goutte à goutte et tuyau d'irrigation fabriqué selon ce procédé

On sait que l'irrigation par goutte à goutte est une méthode de culture appliquée sur une échelle toujours plus grande dans certains pays désirant accroître leur production maraîchaire ou agricole. Cette méthode consiste à déposer dans les zones cultivées des tuyaux conçus spécialement de façon à pouvoir être alimentés en permanence par de l'eau sous pression et à fournir sous un débit de goutte à goutte de faibles quantités d'eau au pied de chaque plante. Il faut donc déposer des tuyaux entre les rangées de plantes et cela de telle manière qu'un ajutage laissant sortir l'eau sous un faible débit se trouve placé à proximité de chaque plante. Ces ajutages doivent donc être répartis le long des tuyaux à des distances correspondant à la distance entre les plantes. En général ces tuyaux sont en matière plastique, ce qui permet de les enrouler sur des bobines ou des tourniquets lor de leur mise hors service. Pour citer quelques exemples, les fascicules de demande de brevet français FR 2,409,795 et FR 2,386,983 et les fascicules de demandes de brevets européens 0 091 059 et 0 069 487 décrivent diverses réalisations de tels tuyaux d'irrigation.

Le but de la présente invention est d'obtenir un abaissement considérable du coût de production des tuyaux d'irrigation par goutte à goutte grâce à un procédé plus rapide, plus fiable et permettant de réaliser des tuyaux dans lesquels le débit s'échappant de chaque ouverture de sortie peut être déterminé à l'avance d'une façon précise.

Le tuyau d'irrigation doit amener l'eau à des plantes qui sont normalement placées en lignes à des distances égales les unes des autres. Il faut donc qu'il présente des ouvertures de sortie dont l'écartement dans le sens de la longueur du tuyau correspond à la distance entre les plantes afin que l'eau s'écoule directement vers chaque plante. Il faut en outre que le débit d'eau sortant de chaque ouverture soit réglé de manière que chaque plante reçoive au moins approximativement la même quantité d'eau.

Dans ce but, un premier objet de l'invention est un procédé de fabrication d'un tuyau d'irrigation par goutte à goutte, comportant un conduit primaire de grande section, au moins un conduit secondaire de petite section, et des ouvertures d'entrée et de sortie faisant communiquer d'une part le conduit primaire avec chaque conduit secondaire et d'autre part ce ou ces derniers avec l'extérieur, caractérisé en ce qu'on forme d'une part un premier profilé tubulaire constituant un profilé de base et d'autre part un second profilé tubulaire constituant une couche extérieure qui entoure le profilé de base, au moins un des dits profilés comportant au moins une gorge longitudinale apte à délimiter avec l'autre profilé un conduit secondaire, on perce le profilé de base de distance en distance pour former des ouvertures d'entrée débouchant dans le ou les conduits secondaires et on perce la couche extérieure de distance en distance de manière à former dans le ou les conduits secondaires des ouvertures de sortie intercalées entre les ouvertures d'entrée.

En outre, la présente invention a également pour objet un tuyau d'irrigation obtenu selon ce procédé et une installation pour la mise en oeuvre du procédé.

On va décrire ci-après à titre d'exemple diverses formes de mise en oeuvre du procédé permettant de réaliser différents tuyaux d'irrigation.

La fig. 1 est une vue en perspective d'un segment de profilé de base,

la fig. 2 une vue également en perspective d'un segment de tuyau d'irrigation utilisant le profilé de base de la fig 1,

les fig. 3 à 8 sont des vues en coupe partielle montrant différentes formes d'exécution du tuyau d'irrigation,

les fig. 9 et 10 sont des vues en plan de dessus de deux variantes de réalisation du tuyau d'irrigation, et

la fig. 11 est une vue schématique en plan de dessus d'une installation d'extrusion permettant la mise en oeuvre du procédé de fabrication de l'invention.

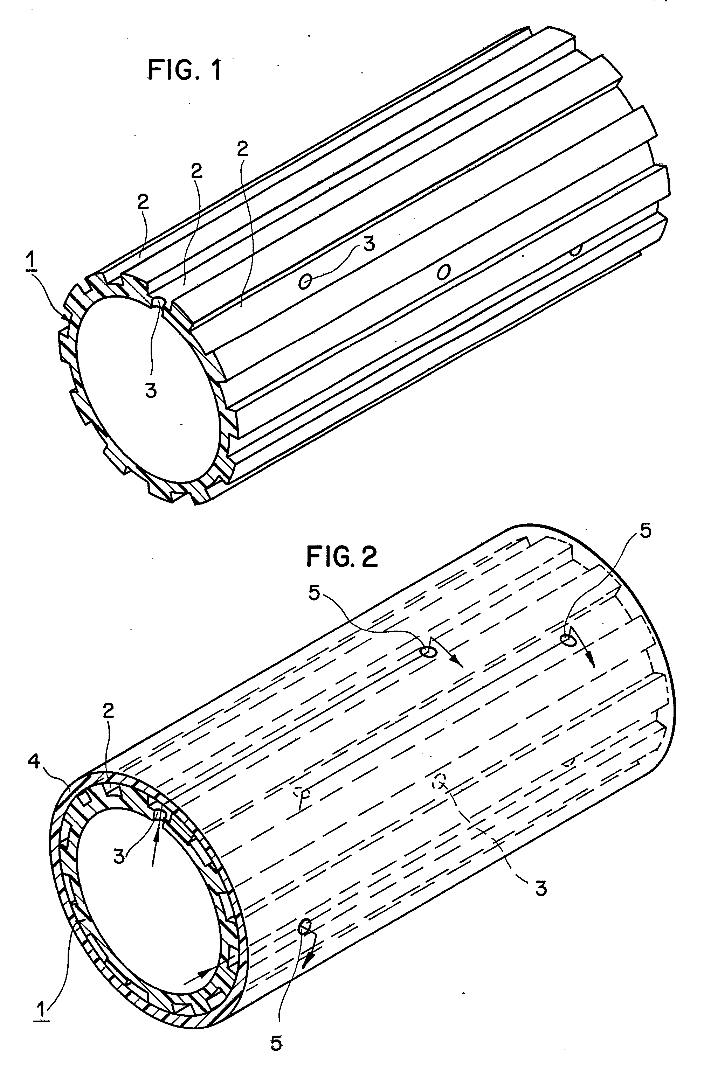

Les fig. 1 et 2 montrent le principe de la réalisation décrite ici. Un profilé de base 1 est formé par extrusion dans une tête classique. Comme on le voit, ce profilé de base présente une face interne cylindrique et dans sa face extérieure une série de gorges longitudinales 2 de même profil réparties sur toute la circonférence du profilé de base. Ces gorges ont un profil rectangulaire, elles s'étendent longitudinalement et parallèlement à l'axe du profilé 1 sur toute sa longueur. Le fond de chacune des gorges 2 présente de distance en distance des ouvertures d'entrée 3. Ces ouvertures d'entrée sont décalées longitudinalement d'une gorge à la suivante d'une distance correspondant à l'espacement entre les plantes qu'il s'agit d'irriger. Les différentes ouvertures d'entrée 3 sont donc disposées le long d'une ligne hélicoïdale autour du profilé 1. Le pas de cette ligne hélicoïdale correspond à la distance entre deux ouvertures d'entrée situées dans une même gorge 2. Si le nombre des gorges sur le pourtour du profilé de base est égal à n, et si la distance entre deux plantes voisines est égal à m, la distance entre deux ouvertures 3 de la même gorge sera égale à n x m.

Comme le montre la fig. 2, pour terminer la fabrication du tuyau d'irrigation, on dispose autour du profilé de base 1 une couche extérieure 4 qui sera également formée par extrusion sur le profilé de base après le percement des ouvertures d'entrée 3. Dans la forme d'exécution représentée, cette couche extérieure est une couche cylindrique d'épaisseur constante qui est liée quasiment par fusion au moment de l'extrusion avec les nervures du profilé de base 1 qui séparent les différentes gorges 2. Comme on le voit également sur cette figure 2, des ouvertures de sortie 5 sont ménagées dans la couche extérieure 4. Dans la forme d'exécution représentée, chacune de ces ouvertures de sortie se trouve à une distance prédéterminée et constante pour toutes les ouvertures de sortie, d'une des ouvertures d'entrée 3 située dans la même gorge. On retrouve ainsi entre les ouvertures de sortie successives 5 le même espacement qu'entre les ouvertures d'entrée, cet espacement étant par exemple égal à la distance m, et l'on voit que dans chaque bande longitudinale de la couche extérieure qui ferme une des gorges 2 on trouvera des ouvertures de sortie 5 espacées d'une distance égale à n x m. L'eau qui circule à l'intérieur du conduit primaire entrera donc par les ouvertures 3 dans les conduits secondaires constitués par les diverses gorges 2, et, après avoir effectué un certain parcours correspondant à une certaine fraction de la distance n x m, aboutira à l'ouverture de sortie 5 la plus proche située dans le même conduit secondaire, et sortira de là pour arroser une plante.

Le point important dans le dimensionnement du tuyau est le fait que des calculs tout à fait conventionnels permettent de déterminer la section et la longueur de chaque conduit secondaire en fonction de la pression d'eau dans le conduit primaire et du débit désiré. Le système d'irrigation proposé utilise le fait que l'écoulement dans les conduits secondaires sera un écoulement laminaire, de sorte que la perte de charge peut être calculée en fonction du diamètre hydraulique du conduit secondaire et de sa longueur. Pour la section d'un conduit secondaire il existe une limite inférieure donnée par le type d'exploitation, c.à.d. la qualité de l'eau utilisée et son degré de contamination en particulier sa teneur en algues. La section des conduits secondaires étant ainsi déterminée, il est possible de calculer la longueur nécessaire pour obtenir dans l'ouverture de sortie le débit voulu. En d'autres termes, le débit n'est réglé ni par la dimension des ouvertures de sortie, ni par celles des ouvertures d'entrée, de sorte que ces ouvertures peuvent être dimensionnées largement, en évitant le risque d'obturation par les impuretés qui peuvent être véhiculées. Cette circonstance facilite également la fabrication comme on le verra plus loin.

Revenant au calcul de débit on s'aperçoit que la longueur maximale d'un conduit secondaire comporte une limite qui est fonction de la distance n. m. En effet, si le tuyau est muni de n conduits secondaires, toutes les n-ièmes plantes seront alimentées par le même conduit secondaire, et la distance entre deux ouvertures de sortie successives de ce même conduit secondaire sera de n x m. (Par exemple, si la distance entre deux plantes est m = 0,8 mètres et que le nombre des conduits secondaires est n = 10, alors la distance entre deux ouvertures de sortie successives dans le même conduit secondaire sera n . m = 8 mètres.

La distance parcourue par l'eau dans chaque conduit secondaire sera égale à une fraction f . n . m de cette distance, le facteur f étant égal à 0,5 ou une valeur inférieure à cette limite.

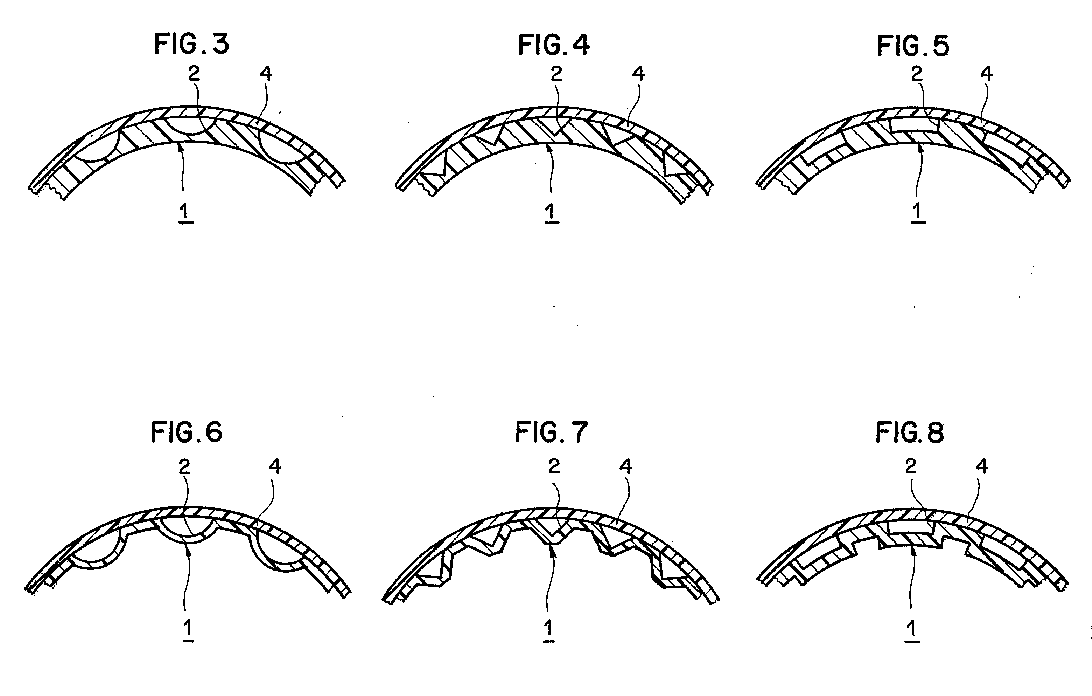

Les fig. 3 à 8 montrent différentes formes d'un profilé de base 1 pourvu de gorges longitudinales et complété par une couche extérieure 4 d'épaisseur constante fermant vers l'extérieur les différentes gorges 2. On voit que dans les fig. 3, 4, et 5 on a respectivement des gorges en forme d'arcs de cercle, de triangles ou de rectangles. Dans ces trois formes d'exécution le profilé de base 1 présente une face interne cylindrique, alors que dans les formes d'exécution selon les fig. 6, 7 et 8, on retrouve les mêmes formes en arcs de cercle, en triangle ou en rectangle pour la section des gorges 2, mais la face interne du profilé de base 1 présente une allure complémentaire de la face externe afin que l'épaisseur de paroi du profilé soit constamment la même, ce qui n'est pas le cas dans les formes d'exécution des fig. 3, 4 et 5.

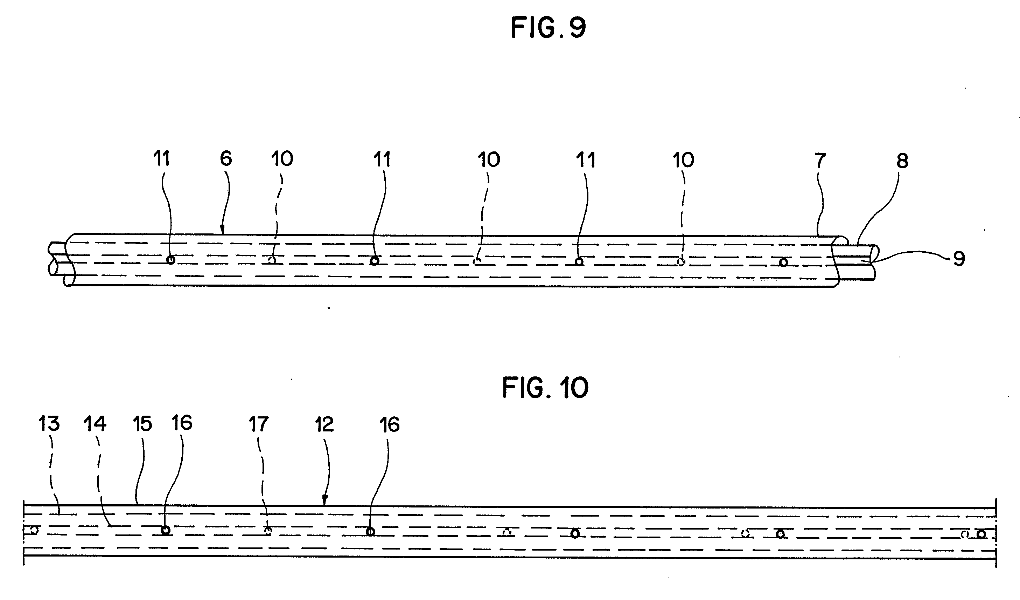

Les fig. 9 et 10 illustrent d'autre part deux variantes d'exécution possibles en ce qui concerne le rapport entre la longueur des conduits secondaires et la distance n . m entre deux ouvertures de sortie. A la fig. 9, on voit un tuyau d'irrigation désigné par 6 qui comporte une couche extérieure 7 et un profilé de base 8. Le profilé de base comporte une seule gorge 9. Les ouvertures d'entrée 10 sont ménagées de distance en distance dans le fond de cette gorge 9, tandis que des ouvertures de sortie 11 sont ménagées également au droit de la gorge 9 dans la couche extérieure 7. La distance entre deux ouvertures 11 successives est dans ce cas égale à m, c'est-à-dire la distance entre les plantes, puisque le nombre n est égal ici à I. En outre, la distance entre les ouvertures 10 est également égale à m, et chaque ouverture 10 est placée à égale distance entre deux ouvertures 11 successives. Le facteur f est donc égal à 0,5.

A la fig. 10 on voit un tuyau d'irrigation 12 dont le profilé de base 13 comporte également une seule gorge 14 et la couche extérieure 15 est un tube cylindrique d'épaisseur constante. Des ouvertures de sortie 16 sont ménagées dans la couche extérieure 15 à des distances égales à m, tandis que la distance entre les ouvertures d'entrée successives 17 est légèrement plus grande que la distance m. Dans ce cas, lors de la fabrication en continu du tuyau 12, il faudra prendre garde de le couper en segments successifs ayant une longueur prédéterminée comme on le voit à la fig. 10. Cette figure représente un tuyau avec des proportions fortement exagérées, mais on se rend compte que, du côté de l'entrée du tuyau, la longueur de chaque conduit secondaire est relativement grande alors que cette longueur se réduit progressivement jusqu'à être pratiquement nulle à l'extrémité côté sortie. En d'autres termes le facteur f qui détermine la longueur des conduits secondaires décroît progressivement de l'entrée vers la sortie du tuyau. Ainsi, en admettant que la longueur totale du tuyau terminé soit connue, on voit que lors de la fabrication on peut tenir compte des pertes de charge dans le conduit primaire afin d'assurer un débit tout à fait constant aux différentes ouvertures de sortie 16. La perte de charge progressivement croissante dans le conduit principal est compensée par le raccourcissement de la longueur des conduits secondaires, ce que l'on obtient selon la forme d'exécution décrite, par le fait que les ouvertures d'entrée de chaque conduit secondaire se rapprochent progressivement des ouvertures de sortie 16 correspondantes.

On notera également que dans d'autres variantes (non représentées), le tracé des gorges 2, 9 ou 13, au lieu d'être rectiligne et parallèle aux génératrices du tuyau, pourrait également être prévu selon une ligne hélicoïdale de telle sorte que toutes les ouvertures de sortie soient alignés le long d'une même génératrice au lieu d'être répartis selon une ligne hélicoïdale comme on le voit à la fig. 2.

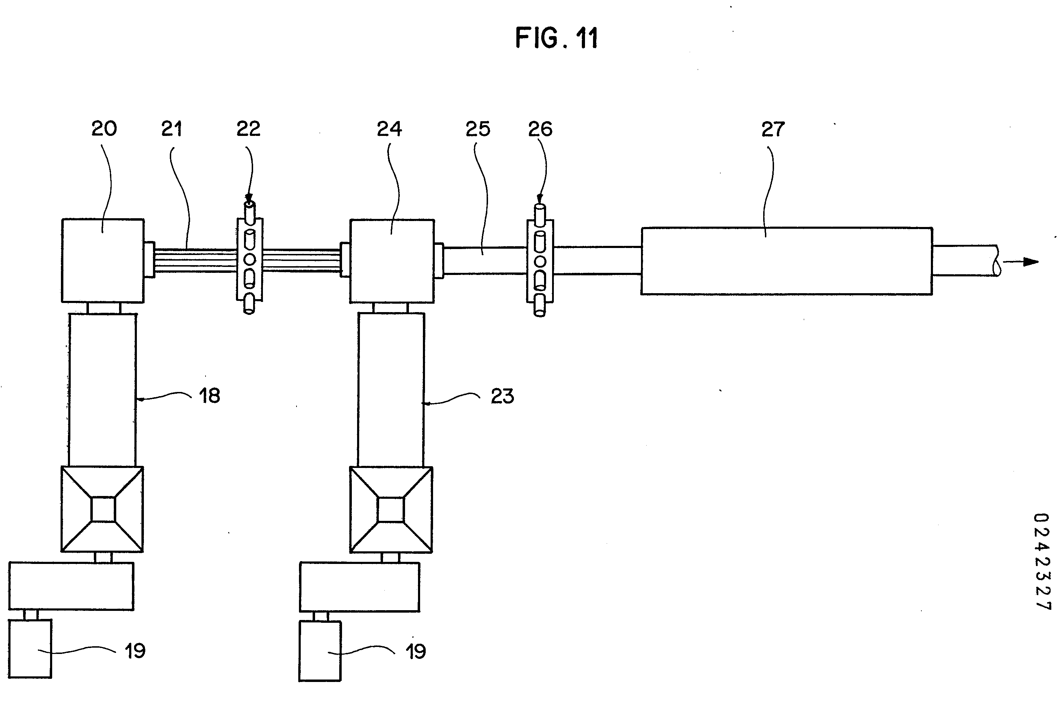

La réalisation d'un tuyau d'irrigation tel que décrit ci-dessus peut être effectuée par extrusion au moyen d'une installation comportant en principe les éléments représentés à la fig. 11. A cette figure on voit une première extrudeuse de type classique 18 qui est entraînée par un moteur 19 et alimente une tête d'extrusion 20 produisant à sa sortie le profilé tubulaire de base 21. A l'aval de la tête d'extrusion 20 est disposé un agencement de perçage désigné de façon générale par 22. Cet agencement peut comporter par exemple des tiges chauffées commandées de façon à se déplacer radialement et à réaliser les ouvertures d'entrée 3 dans le fond des gorges 2 ménagées dans le profilé 21. La commande de ces tiges n'a pas besoin d'être décrite en détail. Comme on l'a dit précédemment, les dimensions des ouvertures d'entrée ne doivent pas nécessairement être très précises, de sorte que la réalisation du dispositif de perçage 22 ne pose pas de problèmes insolubles. Les ouvertures peuvent être réalisées par exemple par forage ou par fraisage, par sciage ou par poinçonnage. On peut utiliser un outil froid ou un outil chaud. Les ouvertures peuvent être faites pendant que la matière est encore molle, c.à.d. à la sortie de la tête d'extrusion. Cependant, en variante, on peut également réaliser ces ouvertures après un refroidissement de la matière. Le cas échéant, un bac pourra être placé entre la tête 20 et l'outil 22.

Une seconde extrudeuse 23 alimente une seconde tête d'extrusion 24 qui est traversée par le profilé de base 21 et forme sur ce profilé la couche extérieure 25. Une seconde installation de perçage désignée par 26 est disposée après la tête d'extrusion 24 et forme à l'endroit voulu les ouvertures de sortie 5 visibles à la fig. 2. Finalement, dans la forme d'exécution représentée à la fig. 11, le tuyau terminé traverse un bac de refroidissement 27. Cependant, comme on l'a vu plus haut, un bac intermédiaire pourrait également être prévu, soit avant le dispositif 22, soit après ce dispositif. On a constaté que le profilé de base pouvait être réalisé en PVC chargé, la couche extérieure étant en un PE, par exemple un produit résistant aux rayons ultraviolets et présentant une bonne résistance mécanique et une bonne résistance à l'usure par frottement. En ce qui concerne les ouvertures de sortie 5, ici également la forme, les dimensions et le positionnement ne sont pas critiques. En revanche, la synchronisation entre les ouvertures d'entrée et les ouvertures de sortie, de même que la position des différentes ouvertures dans le profil de base et dans la couche extérieure, doivent être assurées. Dans le cas où les gorges formant les conduits secondaires ont une allure hélicoïdale au lieu d'être rectilignes, ces gorges peuvent être formées au moyen d'une tête 20 montée rotativement. Dans ce cas, les agencements de perçage pourraient ne comporter qu'un seul outil de perçage et non pas un nombre correspondant au nombre des conduits secondaire, comme c'est le cas pour les éléments 22 et 26.

Le procédé décrit permet de réaliser d'une façon simple et rapide, avec un coût minime, un tuyau d'irrigation par goutte à goutte parfaitement apte à fonctionner et présentant une grande fiabilité. Dans cette construction il n'y a pas de pièces rapportées, collées ou soudées servant à la limitation du débit ou à la compensation de la pression. La limitation du débit dans chaque conduit secondaire est assurée par la détermination de la section des conduits secondaires et de la distance que l'eau doit parcourir entre une ouverture d'entrée et l'ouverture de sortie la plus proche. La distance parcourue par l'eau est relativement grande eu égard à la section du conduit, de sorte que l'écoulement dans les conduits secondaires est laminaire et la perte de charge peut être calculée d'une façon conventionelle en fonction des dimensions. Le nombre élevé des conduits secondaires répartis sur tout le pourtour du conduit primaire permet de réaliser de longs passages de l'eau. Une compensation des pertes de charge dans le conduit principal peut être réalisée en réduisant progressivement la longueur des conduits secondaires, ce qui implique une synchronisation conséquente des opérations de perçage lors de la fabrication. En outre, le découpage du produit extrudé en segments de longueur strictement déterminée, doit être assuré. Pour la réalisation de l'installation de fabrication on peut également prévoir au lieu de deux extrudeuses séparées une extrudeuse à deux vis jumellées. On peut aussi prévoir une seule tête d'extrusion alimentée à partir de deux extrudeuses différentes, combinée avec l'outil de perçage et formant les deux profilés superposés dans la même opération.

**Revendications**

1. Procédé de fabrication d'un tuyau d'irrigation par goutte à goutte, comportant un conduit primaire de grande section, au moins un conduit secondaire de petite section, et des ouvertures d'entrée et de sortie faisant communiquer d'une part le conduit primaire avec chaque conduit secondaire et d'autre part ce ou ces derniers avec l'extérieur, caractérisé en ce qu'on forme d'une part un premier profilé tubulaire constituant un profilé de base et d'autre part un second profilé tubulaire constituant une couche extérieure qui entoure le profilé de base, au moins un des dits profilés comportant au moins une gorge longitudinale apte à délimiter avec l'autre profilé un conduit secondaire, on perce le profilé de base de distance en distance pour former des ouvertures d'entrée débouchant dans le ou les conduits secondaires et on perce la couche extérieure de distance en distance de manière à former dans le ou les conduits secondaires des ouvertures de sortie intercalées entre les ouvertures d'entrée.

2. Procédé selon la revendication 1, caractérisé en ce qu'on forme chacun des dits profilés en continu, en des emplacements différents, on conduit le premier profilé à l'emplacement de formation du second profilé, on perce le premier profilé à un emplacement situé entre les dits emplacements de formation des profilés et on perce le second profilé à une emplacement situé à l'aval des emplacements de formation des deux profilés.

3. Procédé selon la revendication 2, caractérisé en ce qu' on forme les profilés par extrusion de matière plastique.

4. Tuyau d'irrigation par goutte à goutte obtenu selon le procédé de l'une des revendications 1 à 3.

5. Tuyau selon la revendication 4, caractérisé en ce qu'il comporte plusieurs conduits secondaires régulièrement répartis autour du conduit primaire.

6. Tuyau selon la revendication 5, caractérisé en ce que les conduits secondaires sont continus sur toute la longueur du tuyau et séparés les uns des autres, chaque ouverture de sortie étant alimentée par l'ouverture d'entrée la plus proche.

7. Tuyau selon la revendication 5, caractérisé en ce que les conduits secondaires sont parallèles à l'axe du tuyau, les ouvertures d'entrée et de sortie successives étant réparties sur des lignes hélicoïdales autour du tuyau.

8. Tuyau selon la revendication 5, caractérisé en ce que les conduits secondaires ont un tracé hélicoïdal autour du conduit primaire et en ce que les ouvertures de sortie sont toutes situées sur une même génératrice du tuyau.

9. Tuyau selon la revendication 5, caractérisé en ce que la distance entre chaque ouverture de sortie et l'ouverture d'entrée la plus proche dans le même conduit secondaire est la même sur tous les conduits secondaires et sur toute la longueur du tuyau.

10. Tuyau selon la revendication 5, caractérisé en ce que la distance entre chaque ouverture de sortie et l'ouverture d'entrée la plus proche dans le même conduit secondaire décroit progressivement le long du tuyau en fonction de la perte de charge dans le conduit primaire entre l'ouverture d'entrée du conduit primaire et l'emplacement considéré.

11. Tuyau selon la revendication 5, caractérisé en ce que les conduits secondaires sont formés par des gorges longitudinales ayant toutes la même section, ménagées dans la face extérieure du profilé de base, la couche extérieure étant constituée par un profilé tubulaire dont la face externe et le face interne sont cylindriques et coaxiales.

12. Installation pour la mise en oeuvre du procédé selon la revendication 1, caractérisée en ce qu'elle comporte deux extrudeuses pourvues respectivement d'une première et d'une seconde tête d'extrusion et agencées pour produire respectivement un premier profilé tubulaire et un second profilé tubulaire, lequel entoure le premier, des moyens de guidage du premir profilé vers la seconde tête d'extrusion, des moyens de perçage du premier profilé disposés entre les deux têtes d'extrusion et des moyens de perçage du second profilé, disposés à l'aval de la seconde tête d'extrusion.

0242327

FIG. 1

FIG. 2

FIG.3

FIG.4

FIG.5

FIG.6

FIG.7

FIG.8

0242327

# FIG. 9

# FIG. 10

**FIG. 11**

0242327